Europäisches Patentamt

European Patent Office

Office européen des brevets

(11) Veröffentlichungsnummer: **0 021 065**
A1

# EUROPÄISCHE PATENTANMELDUNG

(21) Anmeldenummer: 80102915.8

(22) Anmeldetag: 24.05.80

(51) Int. Cl.³: **B 01 L 3/14**, B 01 D 35/00

(30) Priorität: 09.06.79 DE 2923529

(43) Veröffentlichungstag der Anmeldung: 07.01.81
Patentblatt 81/1

(84) Benannte Vertragsstaaten: FR GB IT SE

(71) Anmelder: ABIMED Analysen-Technik Gesellschaft mit
beschränkter Haftung, Ludwigshafener Strasse 26,
D-4000 Düsseldorf 1 (DE)

(72) Erfinder: Schwartz, Hans, Am Hang 2,
D-7951 Warthausen 1 (DE)

(74) Vertreter: Stenger, Alex, Dipl.-Ing. et al, Patentanwälte
Dipl.-Ing. A. Stenger Dipl.-Ing. W. Watzke, Dipl.-Ing. H.J.
Ring Kaiser-Friedrich-Ring 70,
D-4000 Düsseldorf 11 (DE)

(54) **Filtrier- und Zentrifugenbecher.**

(57) Gegenstand der Erfindung ist ein Filtrier- und Zentrifugenbecher zur Abtrennung eines Niederschlags aus einer
Flüssigkeit insbesondere durch Druckfiltration im Rahmen
der Durchführung von Radio-Imun-Assays, mit dem es
ermöglicht ist, die Abtrennung des Niederschlags zur Erzielung kürzerer Zählzeiten, zur Erhöhung des Probendurchsatzes und zur besseren Ausnutzung des Zählgerates derart
vorzunehmen, daß der gesamte Überstand und nicht nur ein
aliquoter Teil zur Messung verwendet werden kann. Hierzu
ist der Becher (3) als Zweikammerbehälter mit einer raumteilenden Lochplatte (7) ausgebildet, welche einen Filter (5)
trägt.

- 1 -

## Filtrier- und Zentrifugenbecher

Die Erfindung betrifft einen Filtrier- und Zentrifugenbecher zur Abtrennung eines Niederschlags von einem Lösungsmittel, insbesondere durch Druckfiltration im Rahmen der Durchführung von Radio-Imun-Assays.

Als Reaktionsgefäße für die automatische Durchführung von Radio-Imun-Assays sind einfache Probebecher bekannt. Das Bestimmungsverfahren enthält jedoch einen Verfahrensschritt, bei dem ein Niederschlag von einem Lösungsmittel abgetrennt werden muß. Dies wurde bisher derart durchgeführt, daß der Niederschlag in dem Probebecher abzentrifugiert wurde und anschließend in einem gesonderten Arbeitsgang ein definierter Teil des Überstandes abgesaugt und ausgemessen wurde.

Der Erfindung liegt die Aufgabe zugrunde, die Abtrennung eines Niederschlags von einem Lösungsmittel derart vorzunehmen, daß der gesamte Überstand und nicht nur ein aliquoter Teil zur Messung verwendet werden kann, womit in der Radiochemie kürzere Zählzeiten, eine Erhöhung des Probendurchsatzes und eine bessere Ausnutzung des Zählgerätes erreicht werden sollen.

- 2 -

Die Aufgabe ist erfindungsgemäß dadurch gelöst, daß der Becher als Zweikammerbehälter mit einer raumteilenden Lochplatte ausgebildet ist, welche einen Filter trägt. Zweckmäßigerweise ist der Becher etwa mittig mit einer inneren Abstufung versehen, die die Lochplatte mit dem Filter trägt. Dabei kann der Filter gemeinsam mit der Lochplatte von einem Bechereinsatz gemäß zweckmäßiger Ausgestaltung der Erfindung gehalten sein, der bündig in den Becher einsteckbar ist. Mit Hilfe dieses Filtrier- und Zentrifugenbechers der Erfindung kann die geplante Abtrennung des Niederschlags in sehr einfacher Weise durchgeführt werden.

Es ist vorteilhaft, den Bechereinsatz am unteren Ende durch eine durchstoßbare Bodenmembran abzuschließen und mit einem Ringflansch zu versehen, der den Durchmesser des Filters aufweist. Dabei kann die Lochplatte einen hochgezogenen Ringflansch aufweisen, der über den Ringflansch des Bechereinsatzes dicht greift. In dieser Ausführungsform besteht der Filtrier- und Zentrifugenbecher im wesentlichen aus drei Teilen, nämlich dem lösungfassenden Bechereinsatz, der am unteren Ende mit einer eingegossenen dünneren Bodenmembran abgeschlossen ist, der Lochplatte, auf die ein Filter gelegt wird und die von unten auf den Bechereinsatz mittels des hochgezogenen Ringflansches aufgepreßt wird, der über den Ringflansch des Bechereinsatzes greift, sowie dem eigentlichen Becher mit der Abstufung als Auflage für die Lochplatte und den Bechereinsatz und ausreichendem Volumen, um unterhalb der Auflage die gesamte Flüssigkeit aus dem Bechereinsatz aufnehmen zu können.

Die Lochplatte kann ein einziges, mittig ausgebildetes Loch haben, zu welchem die Oberfläche der Lochplatte

- 3 -

hin eine Neigung entweder insgesamt oder in Form von sternförmig angeordneten Kanälen aufweist. Als Filter kann ein Papierfilter, eine Glasfritte, eine Teflonmembran oder ein Drahtnetz Verwendung finden. Sämtliche Teile sind bevorzugt aus Kunststoff-Spritzguß hergestellt.

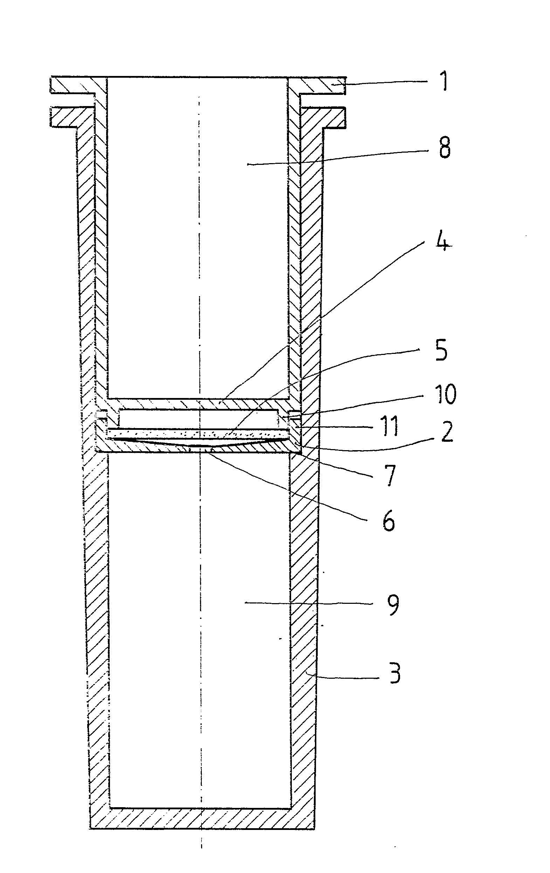

Weitere Einzelheiten, Merkmale und Vorteile des Gegenstandes der Erfindung ergeben sich aus der nachfolgenden Beschreibung der zugehörigen Zeichnung, deren einzige Figur schematisch einen Filtrier- und Zentrifugenbecher gemäß der Erfindung im Schnitt zeigt.

Ein hoher zylindrischer Becher 3 ist mit einer inneren Abstufung 7 versehen, die eine ringförmige Auflage für eine Lochplatte 2 bildet, welche den Becher 3 in einen oberen Raum 8 und einen unteren Raum 9 teilt. Die Lochplatte 2 ist mittig mit einem Loch 6 versehen, zu dem die Oberfläche der Lochplatte 2 hin geneigt ausgebildet ist. Die zum Zentrifugieren gewünschte Schrägung ist geringer als die zum Filtrieren, so daß verschieden ausgebildete Lochplatten mit unterschiedlichem Neigungswinkel Verwendung finden können.

Die Lochplatte weist einstückig einen äußeren hochstehenden Rand 11 auf, dessen Stärke etwa der Tiefe der Abstufung 7 entspricht. Durch den Rand 11 ist der eingelegte Papierfilter 5 gegen eine Verschiebung gesichert. Insgesamt werden Lochplatte 2 und Papierfilter 5 von einem Bechereinsatz 1 aus Kunststoff gehalten, der bündig in den Becher 3 eingesetzt ist und damit den Raum 8 bildet, der ein etwas kleineres Füllvolumen als der Raum 9 des Bechers 3 hat. Der Bechereinsatz 1 faßt beispielsweise 2 ml Lösung. Er ist am unteren Ende durch

- 4 -

eine durchstoßbare Bodenmembran 4 abgeschlossen und mit einem Ringflansch 10 versehen, der etwa den Außendurchmesser des Papierfilters 5 hat und in den umlaufenden Rand 11 der Lochplatte 2 paßt. Oben kann ein Verschluß für den Bechereinsatz 1 vorgesehen sein.

Mit Hilfe des beschriebenen Filtrier- und Zentrifugenbechers kann die geplante Abtrennung eines Niederschlags aus einer Lösung wie folgt vereinfacht durchgeführt werden. Unmittelbar vor der Zentrifugation wird die Bodenmembran 4 im Bechereinsatz 1 durchgestochen. Durch die Zentrifugalkraft erfolgt eine rasche Abfiltration des Niederschlages. Die gesamte Flüssigkeit wird dabei von dem Raum 9 aufgenommen und kann beispielsweise einer Radioaktivitätsmessung zugeführt werden. Hierdurch werden kürzere Zählzeiten erreicht, worauf sich eine Erhöhung des Probendurchsatzes und eine bessere Ausnutzung des Zählgerätes ergeben. Es wird ferner ein Arbeitsgang gegenüber dem bekannten Verfahren dadurch eingespart, daß es nicht notwendig ist, einen Überstand nach der Zentrifugation abzusaugen. Pro Ansatz kann folglich eine größere Anzahl von Proben verarbeitet werden. Ferner ergibt sich als Vorteil, daß mit dem Filtrier- und Zentrifugenbecher die Möglichkeit geschaffen worden ist, sowohl den Niederschlag als auch den Überstand auszuzählen.

- 5 -

Bezugszeichenliste:

| 1 | Bechereinsatz |
|---|---|
| 2 | Lochplatte |
| 3 | Becher |
| 4 | Bodenmembran |
| 5 | Filter |
| 6 | Loch |
| 7 | Lochplatte |
| 8 | oberer Raum |
| 9 | unterer Raum |
| 10 | Ringflansch |
| 11 | Ringflansch |

R/ro

- 1 -

A n s p r ü c h e :

1. Filtrier- und Zentrifugenbecher zur Abtrennung eines Niederschlags aus einer Flüssigkeit insbesondere durch Druckfiltration im Rahmen der Durchführung von Radio-Imun-Assays,
d a d u r c h   g e k e n n z e i c h n e t ,
daß der Becher (3) als Zweikammerbehälter mit einer raumteilenden Lochplatte (7) ausgebildet ist, welche einen Filter (5) trägt.

2. Filtrier- und Zentrifugenbecher nach Anspruch 1, dadurch gekennzeichnet, daß der Becher (3) etwa mittig mit einer inneren Abstufung (7) versehen ist, die die Lochplatte (2) mit dem Filter (5) trägt.

3. Filtrier- und Zentrifugenbecher nach Anspruch 1 und 2, dadurch gekennzeichnet, daß der Filter (5) gemeinsam mit der Lochplatte (2) von einem Bechereinsatz (1) gehalten ist, der bündig in den Becher (3) einsteckbar ist.

4. Filtrier- und Zentrifugenbecher nach einem der Ansprüche 1 bis 3, dadurch gekennzeichnet, daß der Bechereinsatz (1) am unteren Ende durch eine durchstoßbare Bodenmembran (4) abgeschlossen ist und mit einem Ringflansch (10) versehen ist, der den Durchmesser des Filters (5) aufweist.

5. Filtrier- und Zentrifugenbecher nach Anspruch 4, dadurch gekennzeichnet, daß die Lochplatte (2) einen hochgezogenen Ringflansch (11) aufweist, der über den Ringflansch (10) des Bechereinsatzes (1) dicht greift.

6. Filtrier- und Zentrifugenbecher nach einem der Ansprüche 1 bis 5, dadurch gekennzeichnet, daß die Lochplatte (2) ein einziges, mittig ausgebildetes Loch (6) hat, zu welchem die Oberfläche der Lochplatte (2) eine Neigung hin entweder insgesamt oder in Form von sternförmigen Kanälen aufweist.

7. Filtrier- und Zentrifugenbecher nach einem der Ansprüche 1 bis 6, dadurch gekennzeichnet, daß der Filter (5) ein Papierfilter oder eine Teflonmembran ist.

8. Filtrier- und Zentrifugenbecher nach einem der Ansprüche 1 bis 7, dadurch gekennzeichnet, daß der Becher (3), der Bechereinsatz (1) und die Lochplatte (2) Kunststoff-Spritzgußteile sind.

Europäisches Patentamt

**EUROPÄISCHER RECHERCHENBERICHT**

0021065

EP 80 10 2915

## EINSCHLÄGIGE DOKUMENTE

| Kategorie | Kennzeichnung des Dokuments mit Angabe soweit erforderlich der maßgeblichen Teile | Betrifft Anspruch |
|---|---|---|
| X | DE - A - 2 125 027 (WILSON PHARMACEUTICAL & CHEMICAL CORP.)<br>* Seite 9, Zeile 23 bis Seite 11, Zeile 10; Ansprüche 1-4; Seite 13, Zeilen 14-16 *<br>-- | 1-3,7,8 |
| X | DE - A - 1 598 143 (BRAND)<br>* Das ganze Dokument *<br>-- | 1,3,8 |
| | DE - A - 2 245 797 (PHILIPS' GLOEILAMPENFABRIEKEN)<br>* Seite 10, Zeilen 2-18 *<br>-- | 1,4 |
| A | US - A - 3 583 627 (WILSON)<br>* Spalte 2, Zeilen 4-16; Abbildung 2 *<br>-- | 4 |
| A | FR - A - 1 138 452 (POITRAS)<br>* Seite 2, Spalte 1, Zeilen 38-53; Spalte 2, Zeilen 28-57 *<br>-- | 5,6 |
| A | US - A - 3 503 250 (COTTON)<br>* Spalte 2, Zeilen 41-63 *<br>-- | 5,6 |
| A | US - A - 3 682 596 (STONE)<br>* Abbildung 6 *<br>----- | 1-3 |

KLASSIFIKATION DER ANMELDUNG (Int.Cl.³)

B 01 L   3/14
B 01 D 35/00

RECHERCHIERTE SACHGEBIETE (Int. Cl. ³)

B 01 L   3/00
          3/14
B 01 D 33/00
          35/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-09-1980 | LAMMINEUR |

EPA form 1503.1   06.78